# EUROPÄISCHE PATENTSCHRIFT

(11) **EP 0 583 618 B1**
(45) Veröffentlichungstag und Bekanntmachung des Hinweises auf die Patenterteilung: **27.12.1995**
(21) Anmeldenummer: 93111263.5
(22) Anmeldetag: 14.07.1993
(51) Int. Cl.: B60J 3/02

(54) **Sonnenblende für Fahrzeuge**
Sun visor for vehicles
Pare-soleil pour véhicules

(30) Priorität: 08.08.1992 DE 4226252
(43) Veröffentlichungstag der Anmeldung: 23.02.1994
(73) Patentinhaber: BECKER GROUP EUROPE GmbH, 42285 Wuppertal (DE)
(72) Erfinder: Viertel, Lothar, D-66802 Altforweiler (DE); Welter, Patrick, F-57730 Lachambre (FR)

(56) Entgegenhaltungen:
- EP-A- 0 036 467
- EP-A- 0 068 269
- EP-A- 0 099 968
- FR-A- 1 194 761

## Beschreibung

Die Erfindung bezieht sich auf eine Sonnenblende für Fahrzeuge mit einem Sonnenblendenkörper, in dem ein Drahtrahmen zum Aussteifen desselben, eine Lageraufnahme für eine Sonnenblendenachse sowie eine die Sonnenblendenachse klemmende Feder eingelagert sind.

Eine Sonnenblende der gattungsgemäßen Art ist in der EP-B- 0 034 215 gezeigt. Bei dieser bekannten Sonnenblende ist die Lageraufnahme für die Sonnenblendenachse aus einem Blechgehäuse gebildet, das separat hergestellt und z.B. durch Punktschweißen mit dem Drahtrahmen verbunden werden muß.

Eine andere Sonnenblende mit einem im Sonnenblendenkörper eingelagerten Drahtrahmen ist in der FR-A-1 194 761 gezeigt. Bei dieser bekannten Sonnenblende ist aus einem Schenkel des Drahtrahmens ein schraubenfederartig gewundenes Drehlager ausgebildet. Ein solches Drehlager neigt aber entweder zum Klemmen mit dem Nachteil, daß der Sonnenblendenkörper nicht in die Gebrauchslage geklappt werden kann oder zum lockeren Sitz auf der Sonnenblendenachse mit dem Nachteil, daß der Sonnenblendenkörper nicht in seiner Gebrauchslager unter dem Fahrzeughimmel gehalten wird.

Der Erfindung liegt daher die Aufgabe zugrunde, eine Sonnenblende der eingangs genannten Art zu schaffen, die weniger Einzelfeile aufweist und einfacher und kostengünstiger herzustellen ist.

Gemäß der Erfindung wird diese Aufgabe bei einer Sonnenblende, die jener nach der EP-A-0 034 215 gattungsgemäß ausgebildet ist, dadurch gelöst, daß die Lageraufnahme aus zwei mit Abstand nebeneinander angeordneten, aus dem Draht des Drahtrahmens gebogenen Drahtösen gebildet ist und daß ein die Drahtösen miteinander verbindender Drahtsteg die daran befestigte Feder trägt.

Beim Auffinden der Erfindung wurde von der Überlegung ausgegangen, daß für die Bildung des für die Aussteifung des Sonnenblendenkörpers vorgesehenen Drahtrahmens ohnehin eine Drahtbiegevorrichtung zum Einsatz gelangt und daß die für die Bildung von Drahtösen vorzunehmenden zusätzlichen Biegeoperationen keinen besonders ins Gewicht fallenden Aufwand verlangen. Der besondere Erfolg der Erfindung besteht also darin, den Drahtrahmen einstückig mit einer Lageraufnahme in Form von Drahtösen für die Sonnenblendenachse auszubilden, womit die separate Herstellung, Lagerhaltung und Montage des bisher üblichen Blechgehäuses entfallen konnte.

Der Drahtrahmen trägt vorteilhafterweise auch die die Sonnenblendenachse klemmende Feder auf einem die Drahtösen miteinander verbindenden Drahtsteg. Dabei ist in Weiterbildung der Erfindung vorgesehen, daß der Drahtsteg zur verschiebesicheren Anordnung der Feder mit zumindest einer Sicke ausgebildet ist.

In weiterer Ausgestaltung der Erfindung sind die Drahtösen und die Federöffnung von einem nach Fertigstellung des Sonnenblendenkörpers gegen die Sonnenblendenachse austauschbaren Montagehilfsstift durchsetzt. Diese Maßnahme dient der einfachen Herstellung des Sonnenblendenkörpers bzw. der lagegenauen Ausrichtung der Drahtösen und der Feder zueinander, wie auch zur Bildung der Lagerbohrung im Sonnenblendenkörper für das spätere Einsetzen der Sonnenblendenachse. Insbesondere ist diese Maßnahme von Vorteil für eine Weiterbildung der Erfindung gemäß der vorgesehen ist, daß der Drahtrahmen mit Drahtösen, Feder und Montagehilfsstift durch Umschäumen im aus Kunststoffschaum bestehenden Sonnenblendenkörper eingebettet sind.

Schließlich kann noch vorgesehen sein, daß der Drahtrahmen nebst Drahtösen und Drahtsteg aus einem einzelnen Drahtabschnitt gebogen ist und daß die freien Drahtenden gegebenenfalls mit Überlappung im Bereich eines Gegenlagers angeordnet und von einem Kunststoffkörper umgriffen sind, wobei der Kunststoffkörper zudem als Gegenlagerstift ausgebildet ist.

Ein Ausführungsbeispiel der Erfindung wird im folgenden anhand der Zeichnung näher erläutert. Es zeigen:

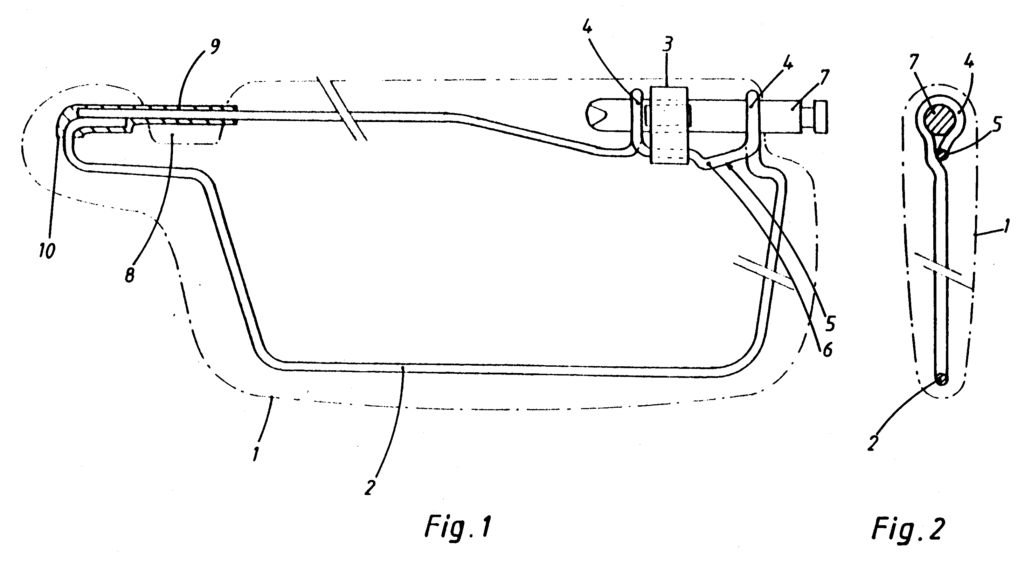

Fig. 1 den Sonnenblendenkörper einer Sonnenblende und
Fig. 2 den Schnitt A - A nach Fig. 1.

Die Zeichnung zeigt mit strichpunktierten Linien den Umriß des Sonnenblendenkörpers 1 und mit ausgezogenen Linien das Innere desselben. Dieses besteht aus einem im verkleinerten Maßstab etwa dem Umriß des Sonnenblendenkörpers 1 folgenden Drahtrahmen 2 und einer Feder 3.

Der Drahtrahmen 2 ist aus nur einem Drahtabschnitt gebogen, und zwar derart, daß er zum einen etwa parallel zum Umfangsrand des Sonnenblendenkörpers 1 verläuft und zum anderen mit Drahtösen 4 ausgebildet ist. Die Drahtösen 4 stehen senkrecht zur allgemeinen Ebene des Sonnenblendenkörpers 1, so daß eine durch die Drahtösen 4 gelegte Achse mit der Sonnenblendenkörperebene zusammenfällt. Die Drahtösen 4 sind mit Abstand zueinander angeordnet und über einen Drahtsteg 5 miteinander verbunden. An diesem Drahtsteg 5 ist die erwähnte Feder 3 mit ihrem unteren Ende festgelegt, wobei durch eine Sicke 6 im Drahtsteg 5 ein Verschieben der Feder 3 verhindert wird. Bei der nicht näher beschriebenen Feder 3 kann es sich um eine übliche Rastfeder handeln, beispielsweise um eine solche der durch die DE-C-25 51 633 bekanntgewordenen Art.

Ein Montagehilfsstift 7 durchsetzt die Drahtösen 4 und die nicht gezeigte Klemmöffnung der Feder 3 und sichert damit die Ausrichtung und Lage dieser Teile zueinander. Dies gilt insbesondere für den Arbeitsgang, bei dem der Drahtrahmen 2 in eine Schäumform plaziert und zwecks Bildung des Sonnenblendenkörpers 1 mit Kunststoffmaterial umschäumt wird. Dabei wird durch den Montagehilfsstift 7 auch eine Stecköffnung im Sonnenblendenkörper 1 geschaffen, in die nach dem Herausziehen des Montagehilfsstiftes 7 eine nicht gezeigte Sonnenblendenachse einsteckbar ist.

Die durch die Drahtösen 4 gebildete Lageraufnahme für die Sonnenblendenachse befindet sich zeichnungsrechtsseitig am oberen Längsrand des Sonnenblendenkörpers 1. Zeichnungslinksseitig befindet sich am selben Längsrand ein eine Ausnehmung 8 querender Gegenlagerstift 9, der zum lösbaren Einrasten in ein nicht dargestelltes Gegenlagerböckchen vorgesehen ist. Der Gegenlagerstift 9 ist Bestandteil eines Kunststoffkörpers 1o, der die hier befindlichen Enden des Drahtrahmens 2 übergreift und aneinander festlegt. Der Kunststoffkörper 1o kann durch Umspritzen der in das Formnest einer Kunststoffspritzgießmaschine eingelegten Drahtenden, die sich dabei, wie dargestellt, überlappen können, gebildet sein.

## Patentansprüche

1. Sonnenblende für Fahrzeuge mit einem Sonnenblendenkörper (1), in dem ein Drahtrahmen (2) zum Aussteifen desselben, eine Lageraufnahme für eine Sonnenblendenachse sowie eine die Sonnenblendenachse klemmende Feder (3) eingelagert sind, dadurch gekennzeichnet, daß die Lageraufnahme aus zwei mit Abstand nebeneinander angeordneten, aus dem Draht des Drahtrahmens (2) gebogenen Drahtösen (4) gebildet ist und daß ein die Drahtösen (4) miteinander verbindender Drahtsteg (5) die daran befestigte Feder (3) trägt.

2. Sonnenblende nach Anspruch 1, dadurch gekennzeichnet, daß der Drahtsteg (5) zur verschiebesicheren Anordnung der Feder (3) mit zumindest einer Sicke (6) ausgebildet ist.

3. Sonnenblende nach Anspruch 1 oder 2, dadurch gekennzeichnet, daß die Drahtösen (4) und die Federöffnung von einem nach Fertigstellung des Sonnenblendenkörpers (1) gegen die Sonnenblendenachse austauschbaren Montagehilfsstift (7) durchsetzt sind.

4. Sonnenblende nach wenigstens einem der Ansprüche 1 bis 3, dadurch gekennzeichnet, daß der Drahtrahmen (2) mit Drahtösen (4), Feder (3) und Montagehilfsstift (7) durch Umschäumen im aus Kunststoffschaum bestehenden Sonnenblendenkörper (1) eingebettet sind.

5. Sonnenblende nach wenigstens einem der Ansprüche 1 bis 4, dadurch gekennzeichnet, daß der Drahtrahmen (2) nebst Drahtösen (4) und Drahtsteg (5) aus einem Drahtabschnitt gebogen ist und daß die freien Drahtenden gegebenenfalls mit Überlappung im Bereich eines Gegenlagers angeordnet und von einem Kunststoffkörper (1o) umgriffen sind, wobei der Kunststoffkörper (1o) zudem als Gegenlagerstift (9) ausgebildet ist.

## Claims

1. Sun visor for vehicles, having a sun visor body (1) in which there are incorporated a wire frame (2) for stiffening the said sun visor body, a bearing fixture for a sun visor axle and a spring (3) which clamps the sun visor axle, characterized in that the bearing fixture is formed from two wire eyes (4), which are disposed next to each other at a distance apart and are bent out of the wire of the wire frame (2), and in that a wire web (5), joining together the wire eyes (4), bears the spring (3) which is fastened to it.

2. Sun visor according to Claim 1, characterized in that the wire web (5), for the displacement-proof arrangement of the spring (3), is configured with at least one bead (6).

3. Sun visor according to Claim 1 or 2, characterized in that the wire eyes (4) and the spring opening are passed through by an assembly-aid pin (7) which, following completion of the sun visor body (1), is exchangeable with the sun visor axle.

4. Sun visor according to at least one of Claims 1 to 3, characterized in that the wire frame (2), together with wire eyes (4), spring (3) and assembly-aid pin (7), are embedded by foam encasement in the sun visor body (1) consisting of plastics foam.

5. Sun visor according to at least one of Claims 1 to 4, characterized in that the wire frame (2), in addition to wire eyes (4) and wire web (5), is bent out of a wire segment, and in that the free wire ends are arranged, where appropriate, such that they overlap in the region of a counter-bearing and are embraced by a plastics body (10), the plastics body (10) being configured, moreover, as a counter-bearing pin (9).

## Revendications

1. Pare-soleil pour véhicules avec un corps de pare-soleil (1), dans lequel est inséré un cadre en fil métallique (2) destiné à rigidifier celui-ci, un logement de tourillonnement destiné à un axe de pare-soleil ainsi qu'un ressort (3) serrant l'axe de pare-soleil, caractérisé en ce que le logement de tourillonnement est constitué de deux oeillets en fil métallique (4), disposés à distance l'un à côté de l'autre, obtenus par pliage à partir du cadre en fil métallique (2), et en ce qu'une âme en fil métallique (5), reliant ensemble les oeillets en fil métallique (4), porte le ressort (3) fixé sur elle.

2. Pare-soleil sel on la revendication 1, caractérisé en ce que l'âme en fil métallique (5) est réalisée avec au moins un dévoiement (6), en vue de disposer le ressort (3) de façon sûre pour empêcher tout déplacement.

3. Pare-soleil selon la revendication 1 ou 2, caractérisé en ce que les oeillets en fil métallique (4) et l'ouverture de ressort sont traversés par une tige d'aide au montage (7), pouvant être remplacée par un axe de pare-soleil (1) après achèvement de la fabrication du corps de pare-soleil.

4. Pare-soleil selon au moins l'une des revendications 1 à 3, caractérisé en ce que le cadre en fil métallique (2) avec les oeillets en fil métallique (4), le ressort (3) et la tige d'aide au montage (7) sont noyés dans le corps de pare-soleil (1) réalisé en matière plastique alvéolaire, par enrobage accompagné de moussage.

5. Pare-soleil selon au moins l'une des revendications 1 à 4, caractérisé en ce que le cadre en fil métallique (2) est obtenu, outre les oeillets en fil métallique (4) et l'âme en fil métallique (5), à partir d'un tronçon de fil métallique, et en ce que les extrémités libres du fil métallique sont disposées, le cas échéant, en chevauchement dans la zone d'un contre-palier et sont enchâssées par un corps en matière synthétique (10), le corps en matière synthétique (10) étant réalisé de plus comme tige de contre-palier (9).
